# EUROPÄISCHE PATENTANMELDUNG

(11) **EP 0 597 534 A2**
(43) Veröffentlichungstag der Anmeldung: **18.05.1994**
(21) Anmeldenummer: 93203103.2
(22) Anmeldetag: 05.11.1993
(51) Int. Cl.: H04B 1/40

(54) **Funkgerät**

(30) Priorität: 13.11.1992 DE 4238282
(71) Anmelder: Philips Patentverwaltung GmbH, 22335 Hamburg (DE); Philips Electronics N.V., 5621 BA Eindhoven (NL)
(72) Erfinder: Saur, Erich, Dr., D-20097 Hamburg (DE)
(74) Vertreter: Volmer, Georg, Dipl.-Ing.

(57) **Zusammenfassung**

Bei Superhet-Empfängern werden zur Umsetzung eines Empfangssignals in eine Niederfrequenzlage und zur Umsetzung eines zu sendenden Signals von einer Zwischenfrequenzlage in die Sendefrequenzlage jeweils ein Mischer benötigt.

Zur Verringerung der Kosten eines solchen Funkgeräts schlägt die Erfindung vor, nur einen Mischer vorzusehen, der sowohl im Empfangsbetrieb als auch im Sendebetrieb genutzt wird. Hierzu sind sowohl hochfrequenzseitige Mittel als auch niederfrequenzseitige Mittel vorzusehen, mit welchen eine Entkoppelung der Sende- und Empfangssignale vorgenommen werden kann.

## Beschreibung

Die Erfindung betrifft ein Funkgerät mit Umsetzung von Sende- und Empfangssignalen in eine Niederfrequenzlage.

Bei Funkgeräten nach dem Superheterodyn-Prinzip wird empfangsseitig eine Umsetzung des Empfangssignals in eine Zwischenfrequenzlage, und von dieser Zwischenfrequenzlage durch Demodulation in eine Niederfrequenzlage vorgenommen. Sendeseitig kann ebenfalls eine Umsetzung des zu sendenden Signals aus einer Niederfrequenzlage in die Sendefrequenz erfolgen. Zur Umsetzung in oder aus der Zwischenfrequenzlage wird jeweils ein Mischer benötigt, mittels welchem das Empfangssignal bzw. das Sendesignal mit einer entsprechenden Mischoszillatorfrequenz gemischt wird.

Aus GB 2188212 ist ein Funkgerät für Duplex- Übertragung bekannt, bei welchem nur im Empfangsbetrieb eine Umsetzung des Empfangssignals in eine Zwischenfrequenzlage vorgenommen wird. Zum Senden hingegen wird der Mischoszillator auf die Sendefrequenz abgestimmt und die Mischoszillatorfrequenz direkt moduliert. Der nur im Empfangsbetrieb erforderliche Mischer wird hierzu im Sendebetrieb in einen reinen Verstärkerbetrieb umgeschaltet. Für den Duplex-Betrieb wird ein gemeinsamen Funkkanal in Zeitschlitze unterteilt, wobei in jedem Zeitschlitz wechselweise gesendet oder empfangen wird.

Weiterhin ist es aus dieser Schrift bekannt, daß zwischen Antenne und Mischer/Verstärker eine Umschaltvorrichtung vorgesehen ist, mittels welcher je nach Betriebsart die Antenne mit dem Empfängereingang bzw. dem Senderausgang verbunden werden kann.

Die allgemeine Entwicklung bei tragbaren Funkgeräten geht dahin, die Baugröße von tragbaren Funkgeräten weiter zu verkleinern und den Endverkaufspreis möglichst preisgünstig zu gestalten.

Der Erfindung liegt die Aufgabe zu Grunde den Platzbedarf bei Funkgeräten zu verringern und zugleich auch kostenintensive Schaltungskomponenten durch andere, preisgünstigere Schaltungsteile zu ersetzen.

Diese Aufgabe wird bei einem Funkgerät der eingangs genannten Art durch folgende Merkmale gelöst:
- einen Mischer, dessen Nutzung sowohl im Empfangsbetrieb als auch im Sendbetrieb vorgesehen ist,
- hochfrequenzseitigen Mitteln zur Entkoppelung von Sende- und Empfangssignal und
- niederfrequenzseitigen Mitteln zur Entkoppelung der Sende- und Empfangssignale.

Durch Verwendung von sowohl hochfrequenzseitiger als auch niederfrequenzseitiger Mittel zum Entkoppeln von Sende- und und Empfangssignal ist auf diese Weise nur noch ein Mischer erforderlich, der in Abhängigkeit der Mittel zur Entkoppelung als Sendemischer oder als Empfangsmischer arbeitet. Gegenüber herkömmlichen Funkgeräten, bei denen zwei Mischer vorzusehen sind, können somit die Kosten für einen zweiten Mischers eingespart werden. Besonders bei hochwertigen Mischern ist dies eine nicht unerhebliche Einsparung, gegenüber der die Kosten für die zusätzlich vorzusehenden Mittel zur Entkoppelung nicht ins Gewicht fallen. Obwohl sich eine solche Kosteneinsparung im Vergleich zu den Gesamtkosten besonders bei Mobilfunkgeräten bemerkbar macht und eine Verminderung der Baugröße erst bei miniaturisierten tragbaren Mobilfunkgeräten, sogenannten "handhelds" an Bedeutung gewinnt, ist die Erfindung prinzipiell in jedem Funkgerät mit Duplexbeziehungsweise Halbduplexbetrieb, also beispielsweise auch in einer Feststation eines Funknetzes einsetzbar.

Die Unterscheidung zwischen hochfrequenzseitig und niederfrequenzseitig bezieht sich auf die Position der Mittel zur Entkoppelung bezüglich des Mischers und soll keine Beschränkung hinsichtlich der gewählten Frequenzen ausdrücken. Hochfrequenzseitig sind somit alle Mittel, die zwischen Antenne und Mischer liegen, niederfrequenzseitig alle Mittel bzw. Schaltungsanordnungen, die zwischen dem Mischer und einer Niederfrequenzstufe liegen, insbesondere auch Mittel die zwischen Mischer und einer Zwischenfrequenzstufe liegen.

In einer Ausgestaltung der Erfindung ist vorgesehen, als Mischer einen bidirektionalen Mischer zu verwenden. Der Vorteil der Verwendung eines bidirektionalen Mischers ist, daß in Zusammenwirkung mit den Mitteln zur Entkoppelung gleichzeitiges Senden und Empfangen mit nur einem Mischer ermöglicht ist.

In einer Ausgestaltung der Erfindung sind als Mittel zur Entkoppelung Zirkulatoren beziehungsweise Leistungsteiler vorgesehen. Vorteilhaft bei der Verwendung von Zirkulatoren beziehungsweise Leistungsteilern ist, daß keine Steuersignale zur Umschaltung zwischen Sende- und Empfangsbetrieb benötigt werden.

In einer anderen Ausgestaltung der Erfindung sind als Mittel zur Entkoppelung elektronische Schaltmittel vorgesehen. Diese bieten den Vorteil, daß sie die zu entkoppelnden Signale nur geringfügig bedämpfen.

In einer weiteren Ausgestaltung der Erfindung sind jeweils unterschiedliche hochfrequenzseitige und niederfrequenzseitige Mittel zur Entkoppelung vorgesehen. Auf diese Weise ist es dem Fachmann möglich, die verwendete Schaltung hinsichtlich bestimmter Kriterien, beispielsweise hinsichtlich des Stromverbrauchs zu optimieren.

Die Erfindung wird nun anhand von in der Zeichnung dargestellten Ausführungsbeispielen näher beschrieben.

Es zeigen:
Fig. 1 einen Funkempfänger gemäß der Erfindung mit Zirkulatoren als Mittel zur Entkoppelung von Sende- und Empfangssignalen und einem bidirektionalen Mischer
Fig. 2 die Anschlußbelegung eines Zirkulators
Fig. 3 einen Funkempfänger gemäß der Erfindung mit Leistungsteilern als Mittel zur Entkoppelung von Sende- und Empfangssignalen und einem bidirektionalen Mischer
Fig. 4 die Anschlußbelegung eines Leistungsteilers
Fig. 5 einen Funkempfänger gemäß der Erfindung mit elektronischen Umschaltern als Mittel zur Entkoppelung von Sende- und Empfangssignalen und einem monodirektionalen Mischer
Fig . 6 eine Funkempfänger gemäß der Erfindung, bei dem die hochfrequnzseitigen Mittel zur Entkoppelung aus einem elektronischen Umschalter und die niederfrequenzseitigen Mittel zur Entkoppelung aus einem Leistungsteiler gebildet sind.

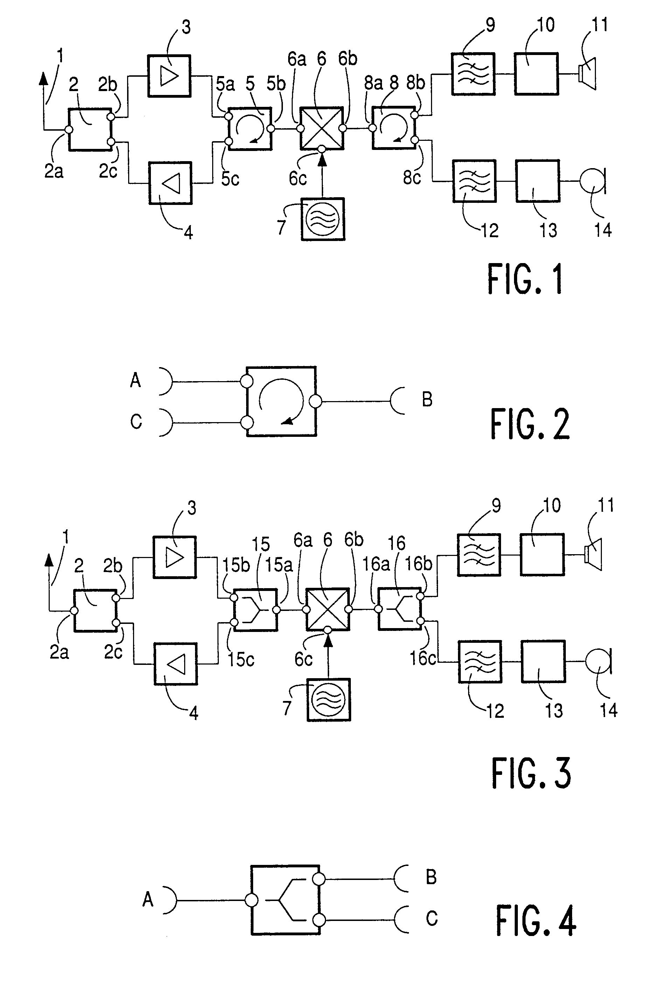

Die Figuren zeigen in schematischer Darstellung ein Funkgerät mit Sender und Empfänger gemäß der Erfindung. Beim ersten, in Fig. 1 dargestellten Ausführungsbeispiel werden zum Senden und Empfangen voneinander verschiedene Frequenzen benutzt. Als Mittel zur Entkoppelung von Sende- und Empfangssignalen werden bei diesem Ausführungsbeispiel Zirkulatoren 5, 8 mit drei Anschlüssen verwendet.

In Fig. 2 ist die Anschlußbelegung eines solchen Zirkulators mit drei Eingängen A, B, C wiedergegeben. Ein, auf einen Anschluß eines solchen Zirkulators gegebenenes Eingangssignal wird bezogen auf eine festliegende Drehrichtung an den nächstliegenden Anschluß weitergeführt. Die festliegende Drehrichtung wird im Schaltbild durch einen Pfeil angegeben. So wird ein am ersten Anschluß A anliegendes Signal an den zweiten Anschluß B, ein am Anschluß B anliegendes Signal an den dritten Anschluß C und ein am dritten Anschluß C anliegendes Signal an den ersten Anschluß A weitergereicht.

Bei dem in Fig. 1 gezeigten Ausführungsbeispiel wird vorteilhafterweise ein bidirektionaler Mischer verwendet. Üblicherweise hat ein Mischer zwei Eingänge und einen Ausgang. An einem Eingang wird dem Mischer ein Eingangssignal und am anderen Eingang eine Oszillatorfrequenz zugeführt. Am Ausgang des Mischers können die Mischprodukte abgegriffen werden. Bei einem bidirektionalen Mischer kann das Eingangssignal auch am Ausgang zugeführt werden und die Mischprodukte können am Eingang abgegriffen werden.

Als bidirektionaler Mischer eignet sich beispielsweise ein Ringmischer. Ein Ringmischer bietet bei diesem Ausführungsbeispiel auch noch den Vorteil, daß eine Mischung in beiden Richtungen zur gleichen Zeit vorgenommen werden kann, wodurch auch gegebenenfalls gleichzeitiges Senden und Empfangen möglich ist.

Zur Verzweigung zwischen Sende- und Empfangszweig, die an einer gemeinsamen Sende- /Empfangsantenne 1 betrieben werden ist im Ausführungsbeispiel ein Duplex-Filter 2 mit je einem Anschluß 2a für die Antenne 1, einen Anschluß 2b für den Emfangszweig und einen Anschluß 2c für den Sendezweig vorgesehen. Zwischen dem Anschluß 2a für die Antenne und dem Anschluß 2b für den Empfangszweig liegt ein Empfangsfilter 21, dessen Durchlaßfrequenz auf die Empfangsfrequenz abgestimmt ist und die Sendefrequenz hinreichend sperrt. Mit dem Anschluß 2b des Empfangszweigs des Duplexfilters 2 ist eine HF-Eingangsstufe 3 verbunden, in welcher ein empfangenes Eingangssignal vorgefiltert und vorverstärkt wird.

Das vorverstärkte Eingangssignal gelangt über den ersten Anschluß 5a des hochfrequenzseitigen Zirkulators 5 über den zweiten Anschluß 5b des hochfrequenzseitigen Zirkulators 5 zum hochfrequenzseitigen Anschluß 6a des Mischers 6. In einem Mischoszillator 7 wird die zur Umsetzung des Empfangssignals in das vorgesehene Niederfrequenzsignal benötigte Oszillatorfrequenz erzeugt und dem Mischer 6 an seinem Mischfrequenzeingang 6c zugeführt. Am niederfrequenzseitigen Anschluß 6b des Mischer 6 liegt somit das in die Zwischenfrequenzlage des Empfängers umgesetzte Eingangssignal an. Dieses Empfänger-ZF-Signal wird über den ersten Anschluß 8a des zwischenfrequenzseitigen Zirkulators 8 auf den zweiten Anschluß 8b des zwischenfrequenzseitigen Zirkulators 8 weitergegeben und somit letztlich einer im Empfangszweig liegenden Zwischenfrequenzstufe 9 zugeführt. In einer darauffolgenden, im Empfangszweig liegenden Signalaufbereitungsstufe 10 erfolgt gegebenenfalls eine Umsetzung in eine weitere Zwischenfrequenzlage und anschließend eine Demodulation und niederfrequente Verarbeitung des Empfangssignals, um es anschließend beispielsweise über einen Lautsprecher 11 wiederzugeben.

Im folgenden wird nun der Betrieb des Funkgerätes im Sendebetrieb beschrieben. Ein von einem Mikrofon 14 aufgenommenes Sprachsignal wird in einer, im Sendezweig liegenden Schaltungsanordnung 13 zur Signalaufbereitung des Sendesignals in ein moduliertes Signal umgesetzt. In einer im Sendezweig liegenden Zwischenfrequenzstufe 12 wird das modulierte Sendesignal in die benötigte Sende-Zwischenfrequenz umgesetzt. Das Sende-Zwischenfrequenzsignal ist dem dritten Anschluß 8c des zwischenfrequenzseitigen Zirkulators 8 zugeführt, der das Sende-Zwischenfrequenzsignal an seinen ersten Anschluß 8a weiterreicht. Auf diese Weise wird das Sende-Zwischenfrequenzsignal dem zwischenfrequenzseitigen Anschluß 6b des Mischers 6 zugeführt.

Das in die Sendefrequenzlage umgesetzte Sendesignal am hochfrequenzseitigen Anschluß 6a des Mischers 6 wird über den hochfrequenzseitigen Zirkulator 5 einer Sendeausgangsstufe 4 zugeführt, in welcher eine Leistungsanhebung des Sendesignals vorgenommen wird. Dieses Sendeausgangssignal gelangt über den Anschluß 2c des Duplex-Filter 2 an die Empfangs-/Sendeantenne 1. Hierzu ist die Durchlaßfrequenz des zwischen Antennenanschluß 2a und dem Anschluß 2c des Sendezweiges liegenden Sendefilters 22 auf die Sendefrequenz abgestimmt.

Durch die Wahl geeigneter Sende-Zwischenfrequenz und Empfangs-Zwischenfrequenz und den auf diese unterschiedlichen Frequenzen abgestimmten Filtern in den Zwischenfrequenzstufen 9,12 ist es in vorteilhafter Weise möglich für Sende- und Empfangsmischung die gleiche Mischoszillatorfrequenz zu verwenden.

Das zweite, in Fig. 3 dargestellte Ausführungsbeispiel ist auf Halbduplex-FunkübertragUngssysteme ausgelegt. Bei Halbduplex-Funkübertragungssystemen wird entweder nur gesendet oder nur empfangen. Als Mittel zur Entkoppelung zwischen Sende- und Empfangssignalen eignen sich daher auch wesentlich kostengünstigere Bauelemente als Zirkulatoren.

Das zweite Ausführungsbeipiel entspricht bis auf die Mittel zur Entkoppelung dem in Fig. 1 dargestellten Ausführungsbeispiel. Bei gleicher Sende- und Empfangsfreuqenz muß ein entsprechend geeignetes Duplexfilter 2 vorgesehen werden, welches im Empfangsbetrieb das Empfangsfilter 21 in Durchlaßwirkung und das Sendefilter 22 in Sperrwirkung schaltet, und im Sendebetrieb das Empfangsfilter 21 in Sperrwirkung und das Sendefilter 22 in Durchlaßwirkung schaltet. Als Mittel zur Entkoppelung werden beim zweiten Ausführungsbeispiel Leistungsteiler verwendet.

Fig. 4 zeigt die Anschlußbelegung eines solchen Leistungsteilers. Bei einem Leistungsteiler kann zum einen, ein an einem ersten Anschluß A anliegendes Signal auf einen zweiten und dritten Anschluß B, C aufgeteilt werden. Zum anderen eignen sich Leistungsteiler auch zur Leistungskombination. Bei Einspeisung zweier Signale am zweiten und dritten Anschluß B, C ist die vektorielle Summe der beiden eingespeisten Signale am ersten Anschluß A erhältlich.

Bei der Beschreibung des zweiten Ausführungsbeispiels werden für gleiche Funktionsblöcke die gleichen Bezugszeichen wie in Fig. 1 verwendet. Als hochfrequenzseitiges Mittel zur Entkoppelung ist ein Leistungsteiler 15 mit seinem zur Leistungsteilung vorgesehenen Eingang 15a mit dem hochfrequenzseitigen Anschluß des Mischers 6 verbunden. Die beiden anderen, bei einer Leistungsteilung als Ausgänge wirkenden Anschlüsse 15b, 15c des Leistungsteilers 15 sind jeweils mit der Hf-Eingangsstufe 3 und der Sendeausgangsstufe 4 verbunden.

Im Empfangsbetrieb liegt ein von der HF-Eingangsstufe 3 stammendes Eingangssignal am zweiten Anschluß 15b an. Da der Eingang der Sendeendstufe 4 keinen Spannungsbeitrag liefert, liegt somit am ersten Anschluß 15a des hochfrequenzseitigen Leistungsteilers 15 nur das von der HF-Eingangsstufe 3 stammende Eingangssignal an.

Im Sendebetrieb hingegen wird das am Eingang 15a des Leistungsteilers 15 anliegende Signal auf die beiden Anschlüsse 15b, 15c aufgeteilt. Ausgenutzt wird jedoch lediglich das am Eingang der Sendeendstufe 4 anliegende leistungsgeteilte Signal. Das am Ausgang der HF-Eingangsstufe 3 ebenfalls nun anliegende Signal wird nicht weiterverwendet und geht somit verloren. Der bei der Leistungsteilung auftretende Leistungsverlust muß dementsprechend durch zuätzliche Verstärkung ausgeglichen werden. Dafür sind aber auch die Kosten für einen Leistungsteilers sehr gering, so daß dieser Nachteil in einer solchen Ausführungsform bewußt in Kauf genommen wird.

In gleicher Weise wird ein zwischenfrequenzseitiger Leistungsteiler 16 dazu benutzt, das im Empfangsfall am zwischenfrequenzseitigen Ausgang des Mischers 6 anstehende Empfangs-Zwischenfrequenzsignal durch Leistungsteilung der Empfangs-Zwischenfrequenzstufe 9 zuzuführen. Das ebenfalls am Ausgang der Sende-Zwischenfrequenzstufe 12 anstehende Signal geht wiederum verloren.

Im Sendebetrieb hingegen wird der zwischenfrequenzseitige Leistungsteiler als Leistungskombinierer betrieben. Das Ausgangssignal der Sende-Zwischenfrequenzstufe 12 wird durch den zwischenfrequenzseitigen Leistungsteiler 16 zum zwischenfrequenzseitigen Eingang des Mischers 6 durchgeschleift.

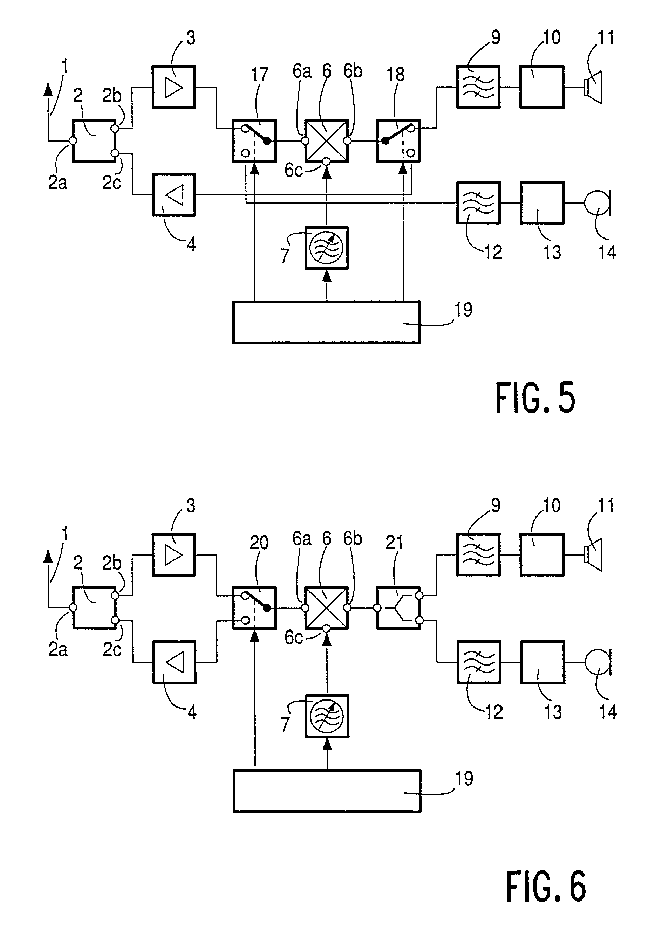

Bei der Beschreibung des In Fig. 5 dargestllten dritten sführungsbeispiels werden für im ersten und zweiten Ausführungsbeispiel beschriebene gleiche Funktionsblöcke wieder gleiche Bezugszeichen verwendet. Im dritten Ausführungsbeispiel werden als Mittel zur Entkoppelung von Sende- und Empfangssignal elektronische Umschalter 17, 18 verwendet. Als Umschalter 17, 18 eignen sich beispielsweise stromgesteuerte Diodenschalter. Durch solche Schalter lassen sich in vorteilhafter Weise ein Großteil der Dämpfungsverluste bei der Entkoppelung der Signale vermeiden.

Ferner ist bei diesem Ausführungsbeispiel vorgesehen, unterschiedliche Sende- und Empfangsfrequenzen zu verwenden. Zur Umschaltung zwischen Empfangs- und Sendefrequenz wird als Mischoszillator 7 ein Oszillator verwendet, dessen Frequenz umschaltbar ist.

Zur Umschaltung zwischen Sendebetrieb und Empfangsbetrieb ist eine Steuerschaltung 19 vorgesehen, die die Umschalter 17, 18 und den Mischoszillator 7 ansteuert. Durch die besondere, in Fig. 5 dargestellte Anschlußbelegung der Umschalter 17, 18 kann auch ein monodirektionaler Mischer verwendet werden. Dem monodirektionalen Mischer 6 kann das zu mischende Signal nur am ersten Eingang 6a zugeführt und das gemischte Signal nur am Ausgang 6b abgenommen werden.

In Figur 5 sind die Umschalter 17, 18 in der Schaltstellung Empfangen dargestellt. Im Empfangsbetrieb ist durch die Schaltstellung des hochfrequenzseitigen Umschalters 17 der Ausgang der HF-Eingangsstufe 3 mit dem Mischereingang 6a, und durch die Schaltstellung des zwischenfrequenzseitigen Umschalters 18 der Mischerausgang 6b mit der Empfangs-Zwischenfrequenzstufe 9 verbunden. Der Mischoszillator 7 ist durch ein Steuersignal auf die Frequenz abgestimmt, die zur Empfangsmischung benötigt wird.

Im Sendebetrieb werden durch entsprechendes Steuersignale die Umschalter 17, 18 in den jeweiligen entgegengesetzten Schaltzustand versetzt und der Mischoszillator 7 auf die benötigte Sendefrequenz eingestellt. Der Mischereingang 6a des Mischers 6 ist dadurch mit dem Ausgang der Sende-Zwischenfrequenzstufe 12, und der Mischerausgang 6b des Mischers 6 mit der Sendeendstufe 2 verbunden.

Welche Mittel zur Entkoppelung im Einzelnen bevorzugt Verwendung finden, hängt davon ab, welche Nebenbedingungen erfüllt werden sollen. So ist es unter Umständen auch vorteilhaft, in einem Funkgerät unterschiedliche Mittel miteinander zu kombinieren.

Bei dem in Fig. 6 dargestellten Ausführungsbeipiel wird als hochfrequenzseitiges Mittel zur Entkoppelung ein elektronischer Umschalter 20 und als zwischenfrequenzseitiges Mittel zur Entkoppelung ein Leistungsteiler 21 verwendet. Diese Ausführungsform bietet den Vorteil einer guten Leistungsbilanz und einer noch akzeptablen Einfügungsdämpfung.

Während bei Leistungsteilern eine Durchgangsdämpfung von beispielsweise 3 dB in Kauf genommen werden muß, ist die Durchgangsdämpfung von beispielsweise stromgesteuerten Diodenschaltern vergleichsweise gering. Andererseits wird zum Schalten bei stromgesteuerten Diodenschaltern ein Schaltstrom in der Größenordnung von mehreren mA benötigt.

Bei Betrachtung des Stromverbrauchs des in Fig. 6 dargestellten Funkgerätes, muß die zusätzliche Leistungsverstärkung in Ansatz gebracht werden, die benötigt wird, um die durch den Leistungsteilers 21 hervorgerufenen Durchgangsdämpfungen auszugleichen. Da das Empfangs-Zwischenfrequenzsignal beziehungsweise das Sende-Zwischenfrequenzsignal selbst nur eine geringe Leistung aufweisen, ist der durch die Durchgangsdämpfung verursachte Leistungsverlust absolut gesehen nur gering. Daher fällt der zusätzliche Strombedarf, der für eine die Durchgangsdämpfung ausgleichende Leistungsverstärkung benötigt wird, kaum ins Gewicht.

Andererseits wird durch die Einfügungsdämpfung eines Leistungsteilers auch der Signal-/Rauschabstand entsprechend verringert. Da wegen der relativ kleinen Signalamplituden empfangener Signale, das Empfangssignal selbst bereits einen niedrigen Signal-/Rauschabstand aufweist, wirkt sich eine zusätzliche Verschlechterung des Signal- /Rauschabstandes durch einen hochfrequenzseitigen Leistungsteilers besonders ungünstig aus. Bei diesem Ausführungsbeispiel wird daher hochfrequenzseitig der höhere Stromverbrauch des elektronischen Umschalters 20 für einen besseren Signal-/Rauchabstand in Kauf genommen. Zwischenfrequenzseitig hingegen ist durch die Frequenzmischung, beziehungsweise durch das zu sendende Signal selbst ein ausreichender Signal-/Rauschabstand gegeben, so daß zwischenfrequenzseitig, wegen des geringeren Stromverbrauchs, dem Leistungsteiler 21 der Vorzug gegeben werden kann.

Die vorgestellten Mittel zur Entkoppelung von Sende- und Empfangssignalen erschöpfen sich nicht in den hier beschriebenen Ausführungsbeispielen. Aufgrund der beschriebenen Funktion ist es dem Fachmann möglich auch andere geeignete Mittel zur Entkoppelung von Sende- und Empfangssignalen zu wählen.

## Patentansprüche

1. Funkgerät mit Umsetzung von Sende- und Empfangssignalen in mindestens eine Niederfrequenzlage mit
- einem Mischer (6), dessen Nutzung sowohl im Empfangsbetrieb als auch im Sendbetrieb vorgesehen ist,
- hochfrequenzseitigen Mitteln (5) zur Entkoppelung von Sende- und Empfangssignal und
- niederfrequenzseitigen Mitteln (8) zur Entkoppelung der Sende- und Empfangssignale.

2. Funkgerät nach Anspruch 1, dadurch gekennzeichnet, daß der Mischer (6) ein Ringmischer ist.

3. Funkgerät nach Anspruch 1 oder 2, dadurch gekennzeichnet, daß als Mittel zur Entkoppelung Zirkulatoren (5,8) vorgesehen sind.

4. Funkgerät nach Anspruch 1 oder 2, dadurch gekennzeichnet, daß als Mittel zur Entkoppelung (5,8) Leistungsteiler (15, 16) vorgesehen sind.

5. Funkgerät nach Anspruch 1 oder 2, dadurch gekennzeichnet, daß als Mittel zur Entkoppelung elektronische Schaltmittel (17,18) vorgesehen sind.

6. Funkgerät nach Anspruch 1, 2, 3, 4 oder 5, dadurch gekennzeichnet, daß jeweils unterschiedliche hochfrequenzseitige und niederfrequenzseitige Mittel zur Entkoppelung vorgesehen sind.

7. Funkgerät nach Anspruch 6, dadurch gekennzeichnet, daß als hochfrequenzseitiges Mittel zur Entkoppelung ein elektronischer Umschalter (20), und als niederfrequenzseitiges Mittel zur Entkoppelung ein Leistungsteiler (21) vorgesehen ist.
